# EUROPEAN PATENT APPLICATION

(11) **EP 4 036 462 A1**
(43) Date of publication of application: **03.08.2022**
(21) Application number: 20868600.6
(22) Date of filing: 18.09.2020
(51) Int. Cl.: F21S 2/00, E06B 9/24, F21S 11/00, F21V 8/00, F21Y 115/10, F21Y 115/15, F21Y 115/30

(54) **OPTICAL MEMBER AND LIGHT GUIDE SYSTEM**

(30) Priority: 26.09.2019 JP 2019175835
(71) Applicant: Nitto Denko Corporation, Ibaraki-shi, Osaka 567-8680 (JP)
(72) Inventor: WATANABE, Kenta, Ibaraki-shi, Osaka 567-8680 (JP); OGASAWARA, Akiko, Ibaraki-shi, Osaka 567-8680 (JP); KISHI, Atsushi, Ibaraki-shi, Osaka 567-8680 (JP)
(74) Representative: Grünecker Patent- und Rechtsanwälte PartG mbB
(86) International application number: PCT/JP2020/035516
(87) International publication number: WO 2021/060194

(57) **Abstract**

An optical component has: a planar liquid layer; and one or more light sources arranged such that light is guided to the planar liquid layer; wherein the liquid layer is configured to guide light.

## Description

### TECHNICAL FIELD

The invention relates to an optical component and a light-guiding system.

### BACKGROUND ART

A lighting fixture that is fixed to the wall, such as a bracket or a footlight, is known to be used. A lighting fixture is also known in which an organic EL (Organic Electro-Luminescent) light-emitting element is used as a light source for an organic EL panel. Since the organic EL panel is thin and light, it can be suitably used in lighting fixtures of various shapes. In addition, a lighting fixture using an organic EL panel can create a warm atmosphere with soft light because the organic EL panel is a surface light source and emits diffused light.

For the purpose of energy savings, a technology has been disclosed in which a water reservoir is formed by water stored in a gap between two light-permeable panels facing each other at a predetermined distance, and microbubbles generated by a microbubble generation means are supplied and mixed into the water reservoir. In this technology, the microbubbles are moved along the surface of the panels to change the light transmittance and adjust the amount of heat absorbed from solar radiation, thereby improving the cooling efficiency of the air conditioning system (For example, see Patent Document 1).

### CITATION LIST

### Patent Document:

Patent Document 1 Japanese Patent Published Application No. 2010-72486

### SUMMARY OF THE INVENTION

### Technical Problem

The lighting fixtures such as organic EL panels can be mounted on ceilings and walls, but they cannot transmit visible light, so when mounted on a window, the scenery outside cannot be seen.

In the technology disclosed in Document 1, although the scenery outside can be seen, there is no function as a light source.

The present invention is made in view of the aspects described above, and an object of the invention is to provide an optical component that can be used as both a light source and a transparent component that transmits visible light.

The optical component has a planar liquid layer and one or more light sources arranged such that light is guided to the planar liquid layer, wherein the liquid layer is configured to guide light.

According to the disclosed technology, an optical component that can be used as both a light source and a transparent component that transmits visible light can be provided.

### BRIEF DESCRIPTION OF THE DRAWINGS

FIG. 1 is a schematic drawing illustrating a light-guiding system according to a first embodiment.
FIG. 2 is a drawing of a hardware block of a control unit included in the light-guiding system according to the first embodiment.
FIG. 3 is a drawing of a function block of a control unit included in the light-guiding system according to the first embodiment.
Fig. 4 is a cross-sectional view (1) illustrating an optical component of the light-guiding system according to the first embodiment.
Fig. 5 is a cross-sectional view (2) illustrating an optical component of the light-guiding system according to the first embodiment.
Fig. 6 is a cross-sectional view (3) illustrating an optical component of the light-guiding system according to the first embodiment.
Fig. 7 is a drawing (1) showing a simulation result.
Fig. 8 is a drawing (2) showing a simulation result.
Fig. 9A is a drawing (3) showing a simulation result.
Fig. 9B is a drawing (4) showing a simulation result.
Fig. 10A is a drawing (5) showing a simulation result.
Fig. 10B is a drawing (6) showing a simulation result.
Fig. 11 is a schematic drawing illustrating an optical component of a light-guiding system according to a second embodiment.
Fig. 12 is a cross-sectional view (1) illustrating an optical component of the light-guiding system according to the second embodiment.
Fig. 13 is a cross-sectional view (2) illustrating an optical component of the light-guiding system according to the second embodiment.
Fig. 14 is a cross-sectional view (3) illustrating an optical component of the light-guiding system according to the second embodiment.

### DESCRIPTION OF THE PREFERRED EMBODIMENTS

The optical component of the present invention can have a planar liquid layer and one or more light sources arranged such that light is guided to the planar liquid layer, wherein the liquid layer is configured to guide light.

The light-guiding form of the liquid layer means a state in which a refractive index of the liquid layer is higher than the refractive index of any of the layers being in contact with both main surfaces of the liquid layer. For example, when the liquid layer is water (refractive index 1.33), any of the layers being in contact with both main surfaces of the liquid layer is an air layer (refractive index 1.00). By taking this form, the light incident from the side of the liquid layer will be guided in a direction of a surface of the liquid layer.

In the above-mentioned form, when the liquid layer does not have a substrate layer serving as a support on both main surfaces of the liquid layer, a surface shape of the main surface of the liquid layer is not particularly limited if the shape is configured to guide light, but it is preferable that the shape mimics the shape provided on the surface of an individual light guide plate such as a publicly-known resin light guide plate. In the above-mentioned form, when at least one of the main surfaces of the liquid layer has a substrate layer that serves as a support, the refractive index of the substrate layer is not particularly limited if it can reflect a part or all of the light at an interface with a layer that contacts a surface of the substrate layer on a side opposite to the liquid layer, but it is preferable that the refractive index of the substrate layer is the same as the refractive index of the liquid layer or lower than the refractive index of the liquid layer.

Another light-guiding form of the liquid layer means a state in which bubbles contained in the liquid layer are greater than or equal to a certain amount. The bubbles are preferably microbubbles. For example, if the liquid layer is water, the liquid layer contains microbubbles using air, carbon dioxide, or other gases that can form microbubbles. The light incident from the side of the liquid layer is repeatedly scattered by the microbubbles and is guided in the direction of the surface of the liquid layer.

In the present invention, when the light source is turned on, the light incident from the light source through the sides of the liquid layer in any of the light-guiding forms of the liquid layer, will be guided across the liquid layer in the direction of the surface and emitted from one or both surfaces of the liquid layer.

In the present invention, when the light source is turned off and the liquid layer does not contain bubbles such as microbubbles, the light from sources other than the light source (hereinafter referred to as external light) can be passed from one of the main surfaces to the other one of the main surfaces of the liquid layer, since the surface of the liquid layer is smooth or at least one of the main surfaces of the liquid layer has a substrate layer. Further, when the light source is turned off and the liquid layer contains bubbles such as microbubbles, the external light gets scattered by the bubbles and thus the privacy function cab be utilized.

In the following, embodiments of the present invention will be described with reference to the accompanying drawings. In each drawing, the same signs are attached to the same components, and redundant explanations are omitted. In addition, in each drawing, the size and shape may be partly exaggerated to facilitate understanding of the contents of this embodiment.

### <First Embodiment>

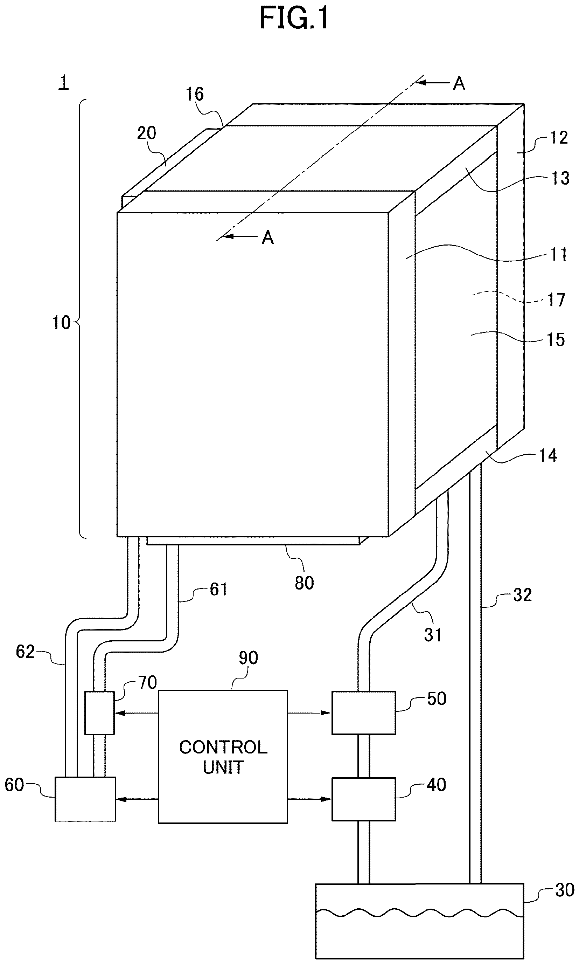

Fig. 1 is a schematic drawing illustrating a light-guiding system according to a first embodiment. As shown in Fig. 1, the light-guiding system 1 has an optical component 10, a water reservoir 30, a pump 40, an electromagnetic valve 50, a gas generation pump 60, a gas supply channel 61, a gas return channel 62, an electromagnetic valve 70, a nozzle 80, and a control unit 90.

The optical component 10 has substrates 11 and 12, supports 13 to 16, a liquid layer 17, and a light source 20. In the light-guiding system 1, the optical component 10 is a part that serves as a light source or a transparent component, and for example, can be attached to a window part of an architectural structure such as a building, a house, and the like.

The optical component 10 has two platelike substrates 11 and 12 arranged substantially parallel to each other at a predetermined distance. The substrates 11 and 12 are transparent and can transmit visible light. The visible light transmittance of the substrates 11 and 12 is preferably 70% or more, more preferably 80% or more, and even more preferably 90% or more. For example, inorganic glass such as soda-lime glass or organic glass such as an acrylic resin can be used as the substrates 11 and 12.

The shape of the substrates 11 and 12 is not particularly limited, and is for example, rectangular. When the shape of the substrates 11 and 12 is rectangular, the size of the substrates 11 and 12, when viewed in a direction parallel to a line A-A in Fig. 1 is not particularly limited, and is, for example, about 2030 mm (length) × 1690 mm (width). The thickness of the substrates 11 and 12 is not particularly limited, and is, for example, about 2 mm to 20 mm. The distance between the substrates 11 and 12 (thickness of the liquid layer 17) is not particularly limited, and is, for example, about 5 mm to 30 mm.

The substrates 11 and 12 are supported in a vertical direction by supports 13 and 14, and also supported in a horizontal direction by supports 15 and 16, forming a planar liquid layer 17 in a sealed void inside. The substrate 12 faces the substrate 11 through the liquid layer 17, and the liquid layer 17 is configured to be in contact with the mutually facing surfaces of the substrates 11 and 12. The liquid layer 17 is, for example, water. An organic solvent and the like may be used instead of water. The term "planar" refers to a state in which the liquid layer is in contact with a predetermined surface of any of the substrates.

In the optical component 10, the structure to support the substrates 11 and 12 is not particularly limited to the embodiment shown in Fig. 1 as long as a sealed void in which the liquid layer 17 is arranged between the substrates 11 and 12 can be formed.

A light source 20 is arranged on a predetermined side of the liquid layer 17 (outer side of the support 16 in the example of Fig. 1), so that the light can be guided to the liquid layer 17. The light source 20 is, for example, an LED array in which multiple LEDs (Light Emitting Diodes) are arranged in one or two dimensions along a longitudinal direction of the support 16. Instead of LEDs, any light source such as an organic EL, a laser, and the like can be selected. The support 16 preferably has the visible light transmittance equivalent to that of the substrates 11 and 12, so as to transmit the light from the light source 20.

The arrangement of the light source 20 is not limited to the embodiment shown in Fig. 1, and, for example, the light source 20 may be arranged on the outer side of the support 15. Alternatively, two light sources 20 facing each other through the liquid layer 17 may be each arranged on the outer side of the support 15 and o on the outer side of the support 16.

The water reservoir 30 is connected to the liquid layer 17 of the optical component 10 through the support 14 by a water supply channel 31 via the pump 40 and the electromagnetic valve 50. The water reservoir 30 is also connected to the liquid layer 17 of the optical component 10 through the support 14 by a drainage channel 32. The positions where the water supply channel 31 and the drainage channel 32 are connected to the liquid layer 17 of the optical component 10 are not particularly limited.

The gas generation pump 60 is a device to generate gases such as air, ozone, and the like, and is connected to the liquid layer 17 of the optical component 10 through the support 14 via the electromagnetic valve 70, the gas supply channel 61, and the nozzle 80. The gas generation pump 60 is also connected to the liquid layer 17 of the optical component 10 through the support 14 via a gas return channel 62.

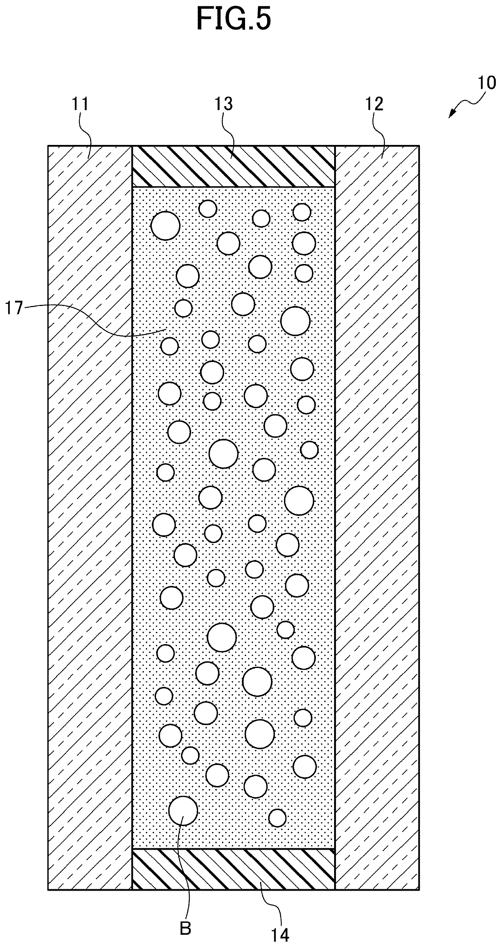

The nozzle 80 is, for example, an elongated cylindrical component and is arranged along an end of the liquid layer 17, facing the end of the liquid layer 17 through the support 14. On a side facing the liquid layer 17, the nozzle 80 is provided with a number of micropores at a predetermined pitch to introduce bubbles B (see Fig. 5) into the liquid layer 17 through the support 14.

The bubbles B are, for example, microbubbles. A microbubble means a bubble with a diameter of about 1 pm to 100 µm. As a nozzle 80, a microbubble generator in any method such as an ejector method, a cavitation method, a swirling flow method, pressure-dissolution method, and the like can be used.

In addition, instead of using the nozzle 80 as a microbubble generator, a method of supplying water that contains microbubbles to the liquid layer 17 may be used. For example, a water reservoir similar to the water reservoir 30 is placed outside the optical component 10, and the water that contains the microbubbles generated by various methods as described above is stored in the reservoir. The water containing microbubbles can be supplied to the liquid layer 17 from this reservoir by a pump and the like, as appropriate.

Since a life-span of the microbubbles is only a several minutes to a several tens of minutes, the microbubbles are to be introduced into the reservoir, as appropriate, or the reservoir is to be constantly filled with the microbubbles.

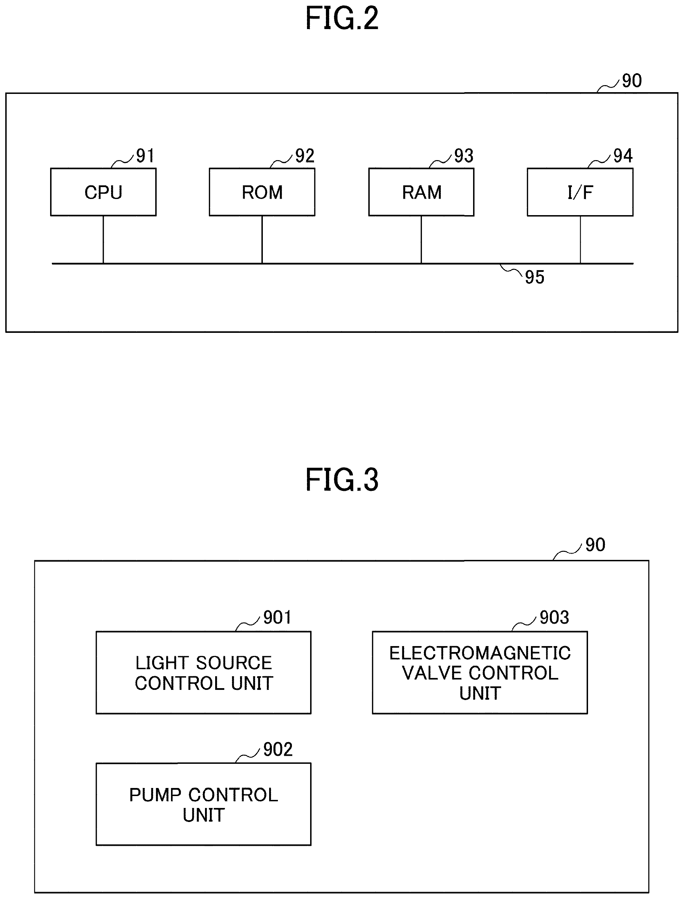

The control unit 90 controls the light source 20, the pump 40, the electromagnetic valve 50, the gas generation pump 60, and the electromagnetic valve 70. The control unit 90 will be explained in detail with reference to Figs. 2 and 3.

Fig. 2 is an example of a hardware block diagram of a control unit included in the light-guiding system of the first embodiment. As shown in Fig. 2, the control unit 90 includes, as main components, a CPU 91, a ROM 92, a RAM 93, an I/F 94, and a bus line 95. The CPU 91, the ROM 92, the RAM 93, and the I/F 94 are connected to each other via the bus line 95. The control unit 90 may have other hardware blocks, as appropriate.

The CPU 91 controls each function of the control unit 90. The ROM 92, which is a storage means, stores a program that CPU 91 executes to control each function of the control unit 90 as well as various information. The RAM 93, which is a storage means, is used as a work area and the like for the CPU 91. The RAM 93 can also temporarily store predetermined information. The I/F 94 is an interface to be connected to other devices, for example, an external network and the like.

The control unit 90 can be a processor that is programmed to execute each function by software, such as a processor implemented by an electronic circuit, or an Application Specific Integrated Circuit (ASIC), a Digital Signal Processor (DSP), a Field Programmable Gate Array (FPGA), a System on a Chip (SOC), or a Graphics Processing Unit (GPU) designed to execute a predetermined function. The control unit 90 may also be a circuit module and the like.

Fig. 3 is an example of a function block diagram of a control unit included in the light-guiding system of the first embodiment. As shown in Fig. 3, the control unit 90 is, as a main functional block, equipped with a light source control unit 901, a pump control unit 902, and an electromagnetic valve control unit 903. The control unit 90 may have other function blocks, as appropriate.

The light source control unit 901 has a function to switch on/off the light source 20. The pump control unit 902 has a function to control a water supply amount and a drainage amount of the liquid layer 17, for example, by changing rotation speed of the motor of the pump 40. The pump control unit 902 also has a function to control the gas generation pump 60 to generate the bubbles B. The electromagnetic valve control unit 903 has a function to control the electromagnetic valve 50 to turn on/off the water supply to the liquid layer 17. The electromagnetic valve control unit 903 also controls the electromagnetic valve 70 to turn on/off the supply of bubbles to the liquid layer 17. The control unit 90 may have other functions, as appropriate.

The water supply to the liquid layer 17 from the water reservoir 30 is an example; for example, the water may be supplied to the liquid layer 17 from a water source such as a water utility.

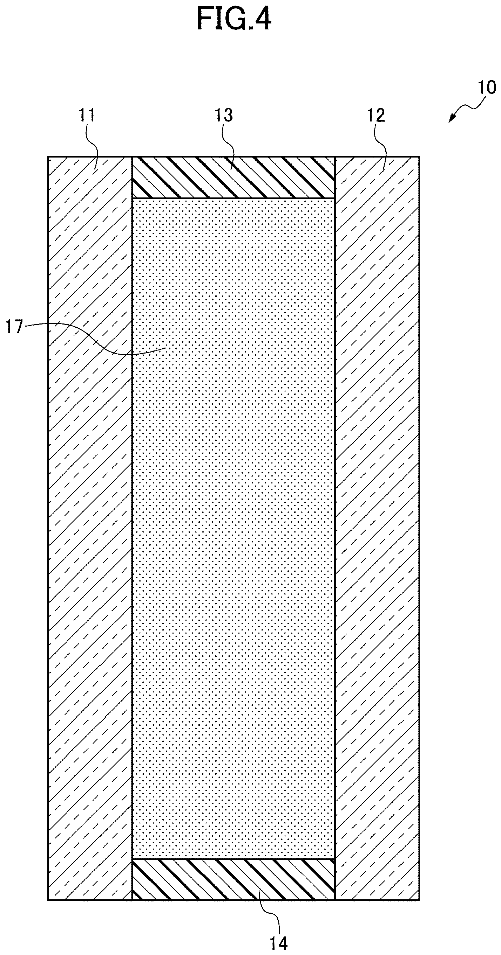

Fig. 4 is a cross-sectional view (1) illustrating an optical component of the light-guiding system of the first embodiment, showing a vertical section along the line A-A of Fig. 1. In Fig. 4 shows a state in which the light source 20 is turned off.

In Fig. 4, for example, when the substrate 11 is soda-lime glass, the refractive index n1 is 1.51. When the liquid layer 17 is water, the refractive index n2 is 1.33. In this case, light incident from outside the optical component 10 passes through the optical component 10. Therefore, the optical component 10 can function as a transparent component that transmits visible light similar to glass and the like. The optical component 10 may also transmit light other than visible light. The same material may be used, or different materials may be used for the substrate 11 and the substrate 12.

Fig. 5 is a cross-sectional view (2) illustrating an optical component of the light-guiding system according to the first embodiment. In Fig. 5, the bubbles B are introduced into the liquid layer 17 as in Fig. 4 and the liquid layer 17 is in a state in which the bubbles are flowing from the side of the support 14 to the side of the support 13, while the light source 20 remains turned off.

As shown in Fig. 5, when the bubbles B are introduced into the liquid layer 17, the liquid layer 17 becomes cloudy. In other words, the liquid layer 17 changes from a state of not having bubbles B, as shown in Fig. 4 (a first state) to a state of having the bubbles B, with the visible light transmittance and ultraviolet light transmittance being reduced (a second state). In Fig. 5, the bubbles B scatter light, so the liquid layer 17 is in a form that can guide light from the light source 20. However, since the light source 20 is not turned on, the liquid layer 17 is not functioning as a light guide.

The bubbles B have a predetermined distribution state within the liquid layer 17. The bubbles B may contain bubbles of different sizes. The predetermined distribution state is, for example, a state in which the bubbles B are controlled to have different densities in different areas of the liquid layer 17. Alternatively, the predetermined distribution state is, for example, a state in which the bubbles B are uniformly distributed in the liquid layer 17. Here, uniform means that the variation of the density of the bubbles B per unit volume is within 10% in the liquid layer 17.

The density of the bubbles B introduced into the liquid layer 17 can be adjusted depending on the various methods, in both cases of using the ejector method, the cavitation method, the swirling flow method, the pressure-dissolution method, and the like as the nozzle 80, and using the method of supplying water that contains the microbubbles, to the liquid layer 17. The higher the density of the bubbles B is, the stronger the cloudy state of the liquid layer 17 and the lower the visible light transmittance and the ultraviolet light transmittance of the liquid layer 17 become.

By appropriately controlling the cloudy state of the liquid layer 17 by the pump control unit 902, the visible light transmittance and the ultraviolet light transmittance are reduced from the state shown in Fig. 4, so that the visible light and the ultraviolet light can be blocked.

For example, by adjusting the density of the bubbles B introduced into the liquid layer 17 to a relatively high level, the optical component 10 can be used as privacy glass to block outside light. Further, by adjusting the density of the bubbles B introduced into the liquid layer 17 to a relatively low level, an anti-glare function can be realized. When the optical component 10 is mounted on a window of an architectural structure, the cloudy state of the optical component 10 is adjusted depending on the size of the energy entering the room, thereby suppressing the energy entering the room and increasing the cooling efficiency of the air conditioner in the room. The optical component 10 can also be used for a floor or a skylight window of an architectural structure.

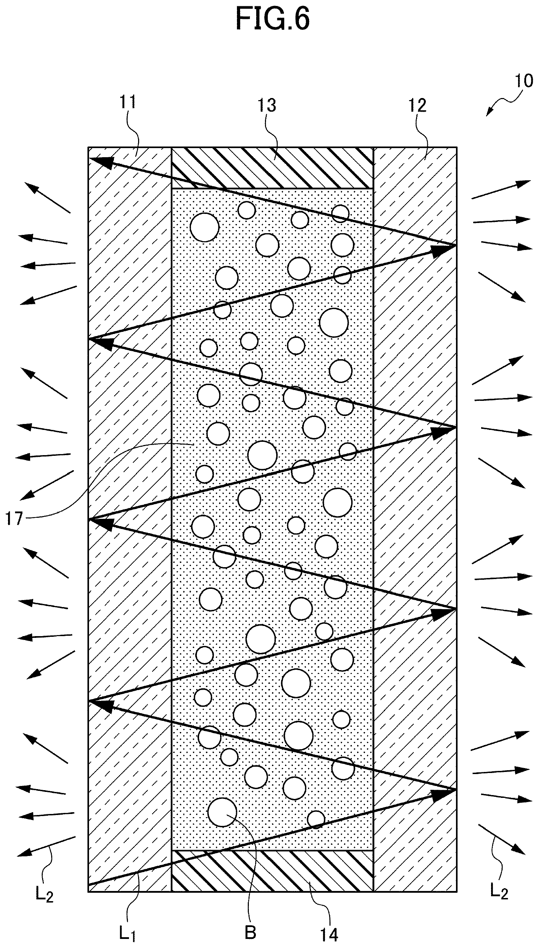

Fig. 6 is a cross-sectional view (3) illustrating an optical component of the light-guiding system according to the first embodiment. In Fig. 6, the bubbles B are introduced into the liquid layer 17 as in Fig. 4 and the liquid layer 17 is in a state in which the bubbles are flowing from the side of the support 14 to the side of the support 13, while the light source 20 is turned on. That is, it shows a state of the light source 20 being turned on in Fig. 5.

In Fig. 6, it is preferable to distribute the bubbles B in such a manner that the density is low on the side close to the light source 20 (on the side of the support 16) and increases as the distance from the light source 20 increases. The optical component 10 can function as a surface light source that emits the light that has been guided through the liquid layer 17, through a predetermined surface of the substrates 11 and 12 (the surface opposite to the surface being in contact with the liquid layer 17).

In Fig. 6, the light L₁ emitted from the light source 20 enters the liquid layer 17 through the support 16, and travels through repeated total reflection within the liquid layer 17, the substrate 11, and the substrate 12, which function as light guides. A part of the light is reflected to the substrates 11 and 12, and is emitted from the substrates 11 and 12 to the outside. By increasing the density of the bubbles B from the side close to the light source 20 to the side farther away from the light source 20 so that luminance of emitted light L₂ from the substrates 11 and 12 becomes uniform over the entire surface of the emitting surface of the substrates 11 and 12, the optical component 10 can function as the surface light source.

That is, if the light source control unit 901 of the control unit 90 turns on the light source 20, and the pump control unit 902 and the electromagnetic valve control unit 903 control the pump 40 and the electromagnetic valve 50 so that the density of the bubbles B increases from the side close to the light source 20 to the side farther away from the light source 20, the optical component 10 can function as the surface light source. How much the density of bubbles B is to be increased from the side closer to the light source 20 to the side farther away from the light source 20 to be suitable will be described later with reference to simulation results.

Thus, the pump 40 and the electromagnetic valve 50 forms a liquid layer changing unit that is controlled by the control unit 90 to change the liquid layer 17 between the first state and the second state. Then, if the light source control unit 901 of the control unit 90 turns off the light source 20 and the pump control unit 902 and electromagnetic valve control unit 903 of the control unit 90 controls the liquid layer 17 to the first state, the optical component 10 can function as the transparent component that transmits visible light.

If the light source control unit 901 of the control unit 90 turns off the light source 20 and the pump control unit 902 and the electromagnetic valve control unit 903 of the control unit 90 control the liquid layer 17 to the second state, the optical component 10 can function as a component having an anti-glare or light-shielding function.

Further, if the light source control unit 901 of the control unit 90 turns on the light source 20, and the pump control unit 902 and the electromagnetic valve control unit 903 of the control unit 90 control the liquid layer 17 to the second state, the optical component 10 can function as the surface light source with a light emitting surface that emits the light that has been guided through the liquid layer 17.

As described above, the two light sources 20 facing each other through the liquid layer 17 may be arranged on the outer side of the support 15 and on the outer side of the support 16. In this case, if the light source control unit 901 of the control unit 90 turns on the light source 20, and the pump control unit 902 and the electromagnetic valve control unit 903 control the pump 40 and the electromagnetic valve 50 so that the bubbles B are distributed uniformly in the liquid layer 17, the optical component 10 can function as the surface light source.

Further, by making flow velocity of the liquid layer 17 substantially equal to flow velocity of the bubbles B, fluctuation of the emitted light L₂ can be produced, so that the optical component 10 can be used for ornamental purposes. Further, both large and small bubbles may be present in the liquid layer 17. In this case also, the fluctuation of the emitted light L₂ can be produced, so that the optical component 10 can be used for ornamental purposes. In the case of both large and small bubbles being present in the liquid layer 17, multiple nozzles capable of generating bubbles of different diameters can be used instead of the nozzle 80.

### [Simulation]

In the light-guiding system 1, the suitable range of the density of the bubbles B varies greatly depending on the size of the area of the main surfaces of the substrates 11 and 12. Therefore, it is preferable to adjust the density of the bubbles B appropriately in accordance with the area of the main surfaces of the substrates 11 and 12 so as to obtain a good surface light source. Here, as an example, the substrates 11 and 12 are glass. Simulation has been conducted for two cases: one with a narrow main surface area and the other with a wide main surface area. The results are shown below.

### [Confirmation of Luminance Distribution within a Surface by a Calculation Software]

Optical effects of the invention were confirmed for the optical component obtained from Fig. 1 as a model, using Lighttools.

The following calculation models were prepared: a model in which, in a water tank using two pieces of glass having an area of 150 mm × 100 mm, a thickness of 0.5 mm, a refractive index of 1.49, and a distance of 2 mm between the pieces of glass, the light enters from both ends of a long side of the water tank (a pattern with a narrow area of the main surface of the glass); and a model in which, in a water tank using two pieces of glass having an area of 2030 mm × 1690 mm, a thickness of 0.5 mm, a refractive index of 1.49, and a distance of 2 mm between the pieces of glass, the light enters from both ends of the long side of the water tank (a pattern with a wide area of the main surface of the glass).

Water with a refractive index of 1.33 was sealed in the tank, and microbubbles with a diameter of 1 pm and a refractive index of 1 were introduced into the water in various methods. The luminance distribution within the surface of the glass was calculated using the density of the microbubbles as a parameter.

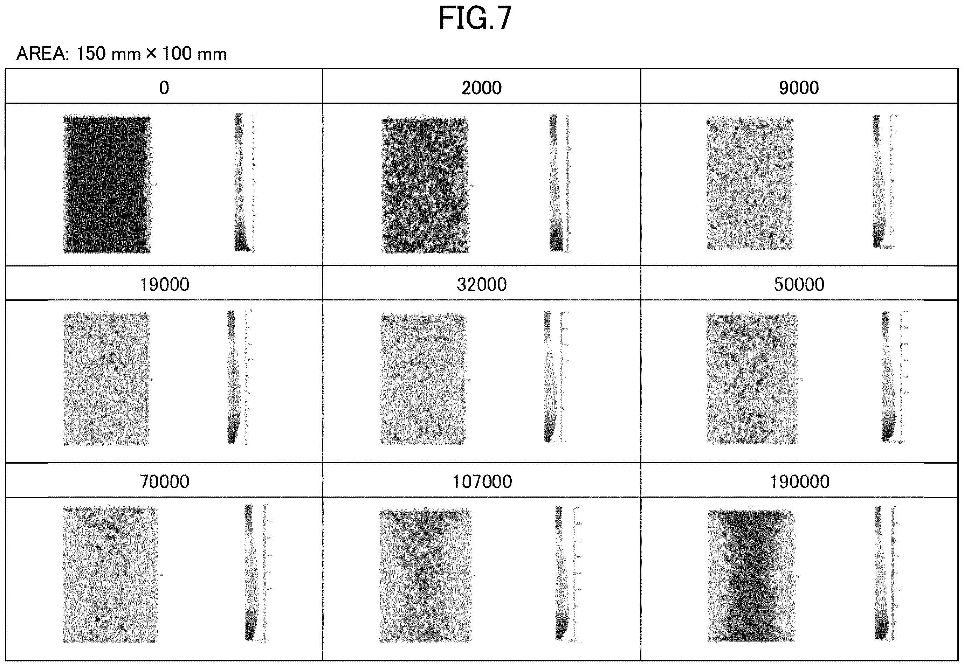

Simulation results for the pattern with the narrow area of the main surface of the glass (the model with the area of 150 mm × 100 mm) are shown in Fig. 7. In Fig. 7, the upper numerical values show the density of microbubbles [bubbles/mm³] and the lower numerical values show calculation results of the luminance distribution within a surface of the glass.

As shown in Fig. 7, it was found that in the model with the area of 150 mm × 100 mm, good luminance distribution within the surface can be obtained when the microbubble density within the surface is in a range of 9,000 to 70,000 bubbles/mm³, while the luminance distribution is poor outside this range. It was also found that the density with the best luminance distribution within the surface was 32,000 bubbles/mm³.

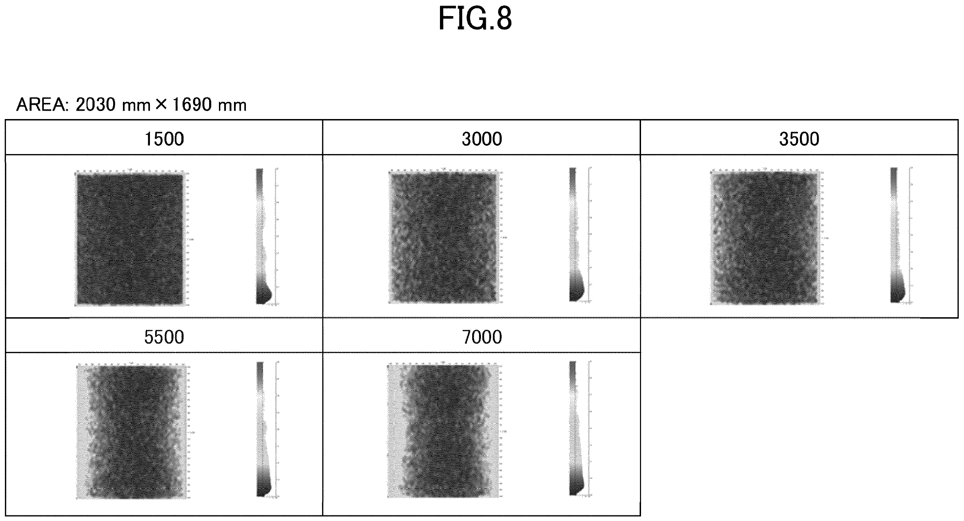

Simulation results for the pattern with the wide area of the main surface of the glass (the model with the area of 2030 mm × 1690 mm) is shown in Fig. 8. In Fig. 8, the upper numerical values show the density of microbubbles [bubbles/mm³], and the lower numerical values show the calculation result of the luminance distribution within the surface of the glass.

As shown in Fig. 8, it was found that in the model with the area of 2030 mm × 1690 mm, good luminance distribution within the surface can be obtained when the microbubble density is in a range of 3,000 to 5,500 bubbles/mm³, while the luminance distribution is poor outside this range. It was also found that the density with the best luminance distribution within the surface was 3,500 bubbles/mm³.

Further, the luminance distribution within the surface of the glass was calculated using the density of the microbubbles in each block as a parameter, with one quarter of the distance of the short side of the water tank as a block in a model in which light enters from one of the ends of the long side of the water tank in the structure above (patterns with the narrow area and the wide area of the main surface of the glass).

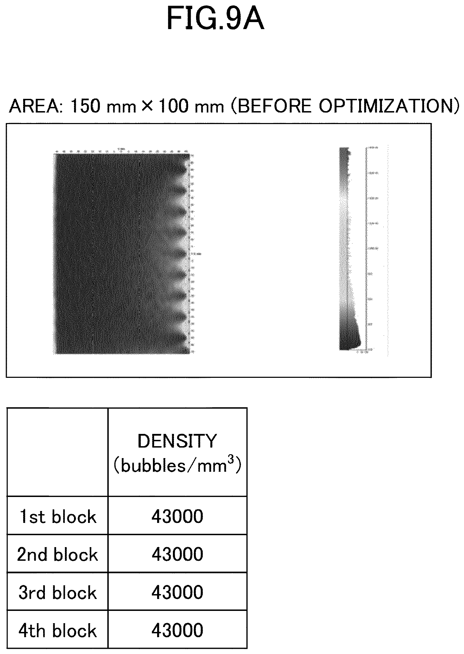

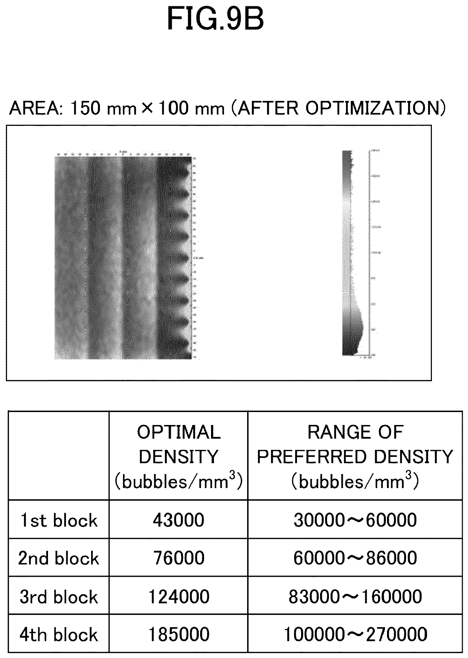

Simulation results for the pattern with the narrow area of the main surface of the glass (the model with the area of 150 mm × 100 mm) are shown in Figs. 9A and 9B. Fig. 9A shows the calculation results of the luminance distribution within the surface of the glass before optimizing the density of the microbubbles, and Fig. 9B shows the calculation results of the luminance distribution within the surface of the glass after optimizing the density of the microbubbles.

As shown in Figs. 9A and 9B, it was found that the luminance distribution within the surface of the glass can be made substantially uniform by optimizing the density of the microbubbles even when the light enters from one of the ends of the long side of the water tank. Specifically, the range of good bubble density in a model with an area of 150 mm × 100 mm was found by simulation, and when each block is called a 1st block, a 2nd block, a 3rd block, and a 4th block from the light source side, the best luminance distribution within the surface was obtained at density of 3,000 to 6,000, 6,000 to 86,000, 83,000 to 160,000, and 100,000 to 270,000 bubbles/mm³, respectively.

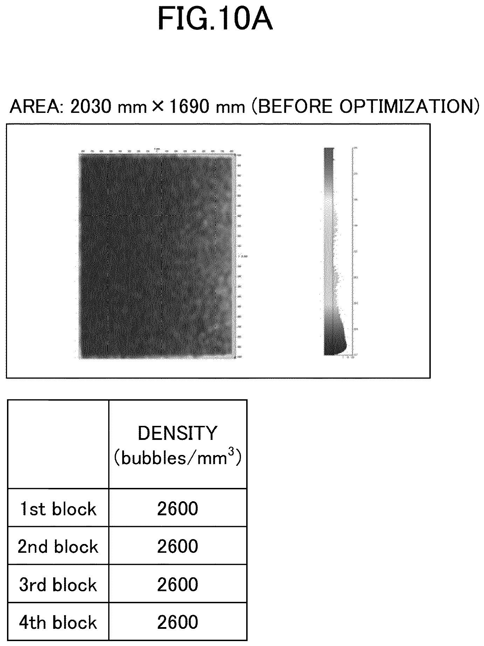

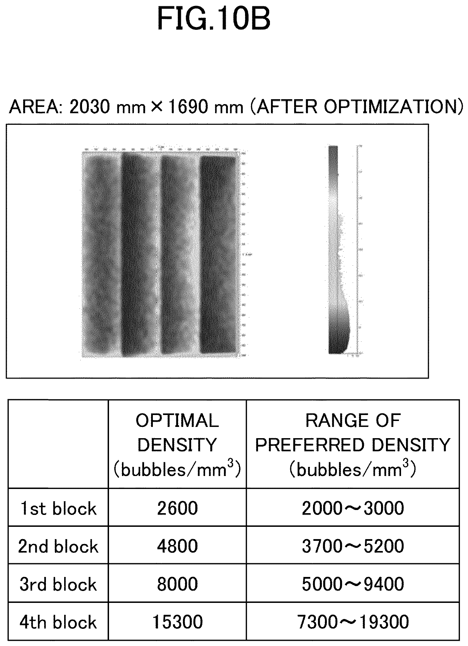

Simulation results for the pattern with the wide area of the main surface of the glass (the model with the area of 2030 mm × 1690 mm) is shown in Fig. 10A and Fig. 10B. Fig. 10A shows the calculation results of the luminance distribution within the surface of the glass before optimizing the density of the microbubbles, and Fig. 10B shows the calculation results of the luminance distribution of the glass after optimizing the density of the microbubbles.

As shown in Figs. 10A and 10B, it was found that the luminance distribution within the surface of the glass can be made substantially uniform by optimizing the density of the microbubbles even when the light enters from one of the ends of the long side of the water tank. Specifically, the range of good bubble density in a model with the area of 2030 mm × 1690 mm was found by simulation and when each block is called a 1st block, a 2nd block, a 3rd block, and a 4th block from the light source side, the best luminance distribution within the surface was obtained at density of 2,000 to 3,000, 3,700 to 5,200, 5,000 to 9,400, and 7,300 to 19,300/mm³, respectively.

From the above results, it is found that if the density of the microbubbles is controlled within a certain range, a good surface light source can be obtained.

Thus, the optical component 10 can be used both as a surface light source with a light emitting surface that emits light and as a transparent component that transmits visible light. In other words, the optical component 10 can be used as a lighting fixture, and can also be used to view outside the room, such as outside scenery. In addition, the optical component 10 can be used for ornamental, anti-glare, shading, and other purposes.

### <Second Embodiment>

In the second embodiment, an example is shown, in which an optical component has a substrate. In the second embodiment, explanation of the same components as in the previously described embodiment may be omitted.

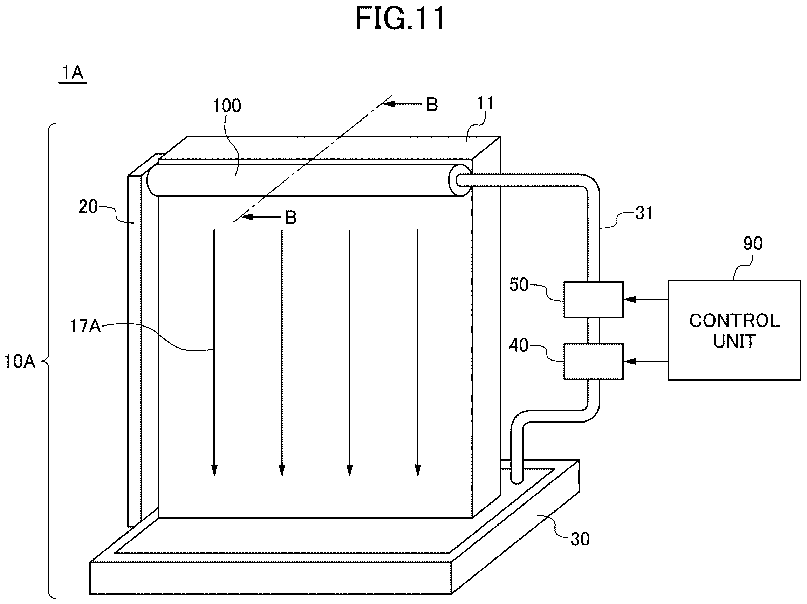

Fig. 11 is a schematic diagram illustrating a light-guiding system according to the second embodiment. As shown in Fig. 11, the light-guiding system 1A differs from the light-guiding system 1 (see Fig. 1) in that the optical component 10 is replaced with an optical component 10A and in that the light-guiding system 1A does not have the drainage channel 32, the gas generation pump 60, the gas supply channel 61, the gas return channel 62, and the nozzle 80.

That is, the light-guiding system 1A has an optical component 10A, the pump 40, the electromagnetic valve 50, and the control unit 90. The optical component 10A has the substrate 11, a liquid layer 17A, the light source 20, the water reservoir 30, and a liquid supply unit 100.

The substrate 11 is arranged in the water reservoir 30 in a shape of a box so as to be substantially perpendicular to a bottom surface of the water reservoir 30. The substrate 11 may be arranged at an angle to the bottom surface of the water reservoir 30 so that the surface being in contact with the liquid layer 17A faces upward.

On an upper edge side of the substrate 11 (on an opposing side of the water reservoir 30), the liquid supply unit 100, which is an elongated cylindrical component with substantially the same width as the substrate 11, is arranged. In the liquid supply unit 100, on the side facing the water reservoir 30, a number of holes are formed at a predetermined pitch to generate the liquid layer 17A. The liquid supply unit 100 can be formed by a vinyl chloride pipe and the like, for example, but is not limited thereto.

The water reservoir 30 is connected to the liquid supply unit 100 by the water supply channel 31 via the pump 40 and the electromagnetic valve 50. The position where the water supply channel 31 is connected to the liquid supply unit 100 of the optical component 10A is not particularly limited.

The liquid layer 17A is a layer being in contact with a predetermined surface of the substrate 11, and is changeable between a first state in which the opposing surface not being in contact with the predetermined surface of the substrate 11 is smooth and a second state in which the opposing surface has wavy irregularities. In the second state, when the light source 20 is turned on, the liquid layer 17A serves as a light guide that guides the light emitted by the light source 20.

The pump control unit 902 and the electromagnetic valve control unit 903 of the control unit 90 can control the pump 40 and the electromagnetic valve 50 so that the liquid layer 17A is in the first state or the second state.

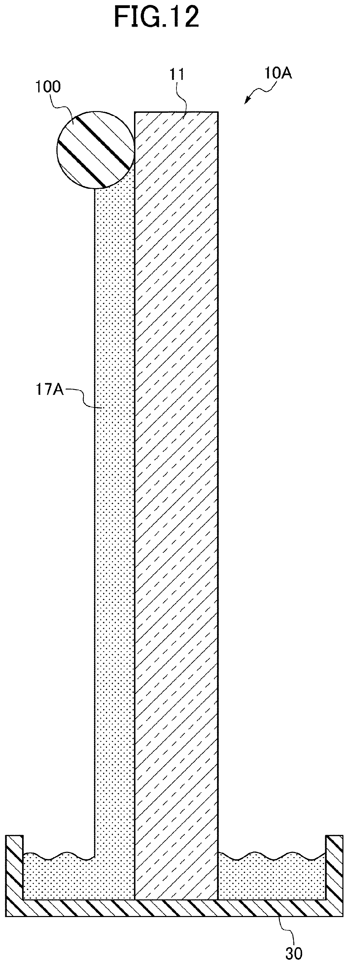

Fig. 12 is a cross-sectional view (1) illustrating an optical component of the light-guiding system according to the second embodiment, showing a vertical section along the line B-B in Fig. 11. In Fig. 12, the liquid layer 17A is in the first state and the light source 20 is turned off.

In Fig. 12, for example, if the substrate 11 is soda lime glass, the refractive index n1 is 1.51. If the liquid layer 17A is water, the refractive index n2 is 1.33. In this case, light incident from outside the optical component 10A passes through the optical component 10A. Therefore, the optical component 10A can function as a transparent component that transmits visible light similar to glass and the like.

Thus, the pump 40 and the electromagnetic valve 50 forms a liquid layer changing unit that is controlled by the control unit 90 to change the liquid layer 17A between the first state and the second state. Then, if the light source control unit 901 of the control unit 90 turns off the light source 20 and the pump control unit 902 and electromagnetic valve control unit 903 of the control unit 90 control the liquid layer 17A to the first state, the optical component 10A can function as a transparent component that transmits the visible light. The optical component 10A may transmit light other than the visible light.

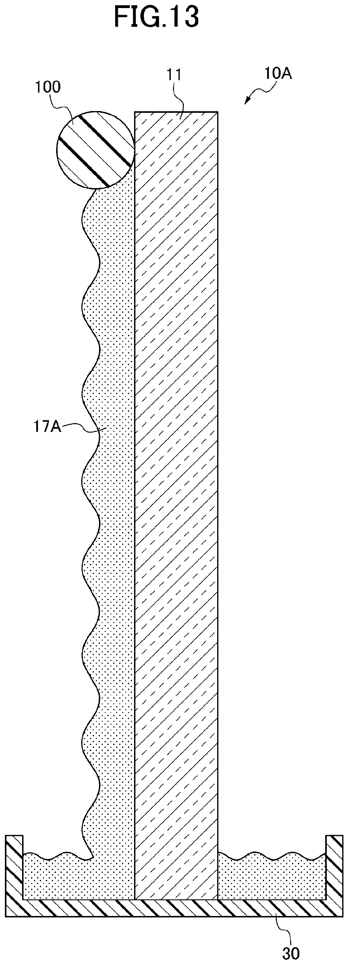

Fig. 13 is a cross-sectional view (2) illustrating an optical component of the light-guiding system according to the second embodiment, showing a vertical section along the line B-B in Fig. 11. In Fig. 13, the liquid layer 17A is in the second state, but the light source 20 remains turned off.

As shown in Fig. 13, when the liquid layer 17A is in the second state, the wavy irregularities make the liquid layer 17A cloudy. The density of the wavy irregularities in the second state can be controlled by the pump control unit 902 that changes the rotation speed of the motor of the pump 40 to adjust the water supply volume of the liquid layer 17A. The higher the water supply amount of the liquid layer 17A is, the denser the wavy irregularities become and the stronger the cloudy state of the liquid layer 17A becomes.

By appropriately controlling the cloudy state of the liquid layer 17A by the pump control unit 902, the visible light transmittance decreases from the state in Fig. 12, so that the visible light and the ultraviolet light can be blocked.

For example, by adjusting the density of the wavy irregularities of the liquid layer 17A to a relatively high level, the optical component 10A can be used as privacy glass. By adjusting the density of the wavy irregularities of the liquid layer 17A to a relatively low level, an anti-glare function can be realized. When the optical component 10A is installed in a window of an architectural structure, the cloudy state of the optical component 10A can be adjusted depending on the size of the energy entering the room, thereby suppressing the energy entering the room and improving the cooling efficiency of the air conditioning system in the room.

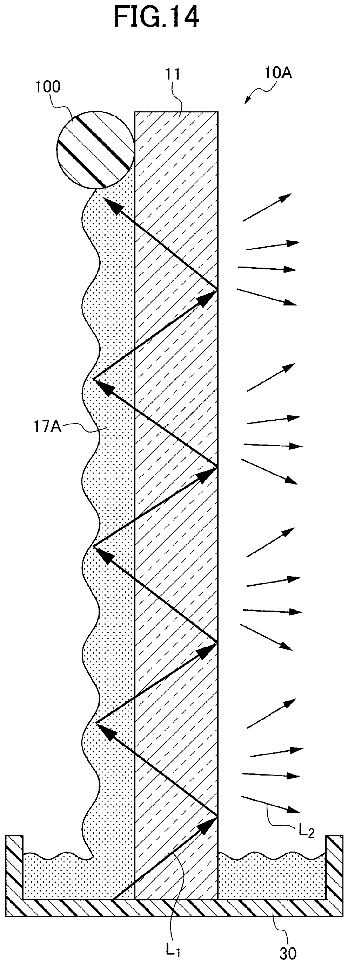

Fig. 14 is a cross-sectional view (3) illustrating an optical component of the light-guiding system according to the second embodiment, showing a vertical section along the line B-B in Fig. 11. In Fig. 14, the liquid layer 17A is in the second state, and the light source 20 is turned on. That is, Fig. 13 shows a state of the light source 20 being turned on.

In Fig. 14, by increasing the density of the wavy irregularities from the side close to the light source 20 to the side farther away from the light source 20, the liquid layer 17A can function as a light guide. In this case, the optical component 10A can function as a surface light source that emits the light that has been guided through the liquid layer 17A and the substrate 11, through a predetermined surface of the substrate 11 (the surface opposite to the surface being in contact with the liquid layer 17A).

In Fig. 14, the light L₁ emitted from the light source 20 enters the liquid layer 17A and travels through repeated total reflection within the liquid layer 17A and the substrate 11, which function as light guides. A part of the light is reflected to the substrate 11 and is emitted from the substrate 11 to the outside. The optical component 10A can function as a surface light source by increasing the density of the wavy irregularities from the side close to the light source 20 to the side farther away, so that the luminance of the light L₂ emitted from the substrate 11 becomes uniform over the entire surface of the emitting surface of the substrate 11.

That is, if the light source control unit 901 of the control unit 90 turns on the light source 20, and the pump control unit 902 and the electromagnetic valve control unit 903 control the pump 40 and the electromagnetic valve 50 so that the density of the wavy irregularities increase from the side close to the light source 20 to the side farther away from the light source 20, the optical component 10A can function as a surface light source.

As described above, the two light sources 20 facing each other through the liquid layer 17A may be arranged. In this case, if the light source control unit 901 of the control unit 90 turns on the light source 20, and the pump control unit 902 and the electromagnetic valve control unit 903 control the pump 40 and the electromagnetic valve 50 so that the density of the wavy irregularities is substantially constant over the entire area of the liquid layer 17A, the optical component 10A can function as the surface light source.

In addition, by both large and small wavy irregularities being present in the liquid layer 17A, the fluctuation of the emitted light L₂ can be produced, so that the optical component 10A can be used for ornamental purposes.

Thus, the optical component 10A can be used both as a surface light source with a light emitting surface that emits light and as a transparent component that transmits visible light. In other words, the optical component 10A can be used as a lighting fixture, and can also be used to view outside the room, such as outside scenery. In addition, the optical component 10A can be used for ornamental, anti-glare, shading, and other purposes.

The preferred embodiments and the like, are described in detail above. However, without being limited to the embodiments and the like described above, different variations and substitutions can be made to the embodiments and the like described above without departing from the scope of the claims.

This international application is based on and claims priority to Japanese patent application No. 2019-175835 filed on September 26, 2019, with the Japanese Patent Office, the entire contents of which are hereby incorporated by reference.

### REFERENCE SIGNS LIST

- 1, 1A: Light-guiding system
- 10, 10A: Optical component
- 11, 12: Substrate
- 13, 14, 15, 16: Support
- 17, 17A: Liquid layer
- 20: Light source
- 30: Water reservoir
- 31: Water supply channel
- 32: Drainage channel
- 40: Pump
- 50, 70: Electromagnetic valve
- 60: Gas generation pump
- 61: Gas supply channel
- 62: Gas return channel
- 80: Nozzle
- 90: Control unit
- 100: Liquid supply unit

## Claims

1. An optical component comprising:
a planar liquid layer; and
one or more light sources arranged such that light is guided to the planar liquid layer;
wherein the liquid layer is configured to guide light.

2. The optical component according to claim 1, wherein the liquid layer is changeable between a first state and a second state in which visible light transmittance is lower than in the first state; and
wherein, while the one or more light sources are turned on in the second state of the liquid layer, the liquid layer guides the light from the one or more light sources.

3. The optical component according to claim 2,
wherein bubbles are not contained in the liquid layer in the first state; and
wherein bubbles are contained in the liquid layer in the second state.

4. The optical component according to claim 3, wherein the bubbles comprise a predetermined distribution state within the liquid layer.

5. The optical component according to claim 3 or 4, wherein the bubbles contain bubbles of different sizes.

6. The optical component according to any one of claims 3 to 5,
wherein the one or more light sources comprises a light source arranged on a predetermined side of the liquid layer; and
wherein the bubbles are distributed in such a manner that a density thereof is low on a side close to the one or more light source, and increases with a distance from the one or more light sources.

7. The optical component according to any one of claims 3 to 5,
wherein the one or more light sources comprise two light sources facing each other through the liquid layer; and
wherein the bubbles are uniformly distributed in the liquid layer.

8. The optical component according to claim 2,
wherein a predetermined surface of the liquid layer is smooth in the first state; and
wherein the predetermined surface of the liquid layer comprises irregularities in the second state.

9. The optical component according to any one of claims 2 to 8, wherein the optical component is a transparent component that transmits visible light while the one or more light sources are turned off and the liquid layer is in the first state.

10. The optical component according to any one of claims 2 to 8, wherein the optical component is a component comprising an anti-glare or a light-shielding function while the one or more light sources are turned off and the liquid layer is in the second state.

11. The optical component according to any one of claims 2 to 8, wherein the optical component is a surface light source with a light emitting surface that emits light that has been guided through the liquid layer while the one or more light sources are turned on and the liquid layer is in the second state.

12. The optical component according to any one of claims 2 to 11, comprising at least one substrate that is in contact with the liquid layer.

13. The optical component according to any one of claims 2 to 11, comprising multiple substrates;
wherein the liquid layer is provided between the multiple substrates.

14. A light-guiding system comprising:
the optical component of any one of claims 2 to 13;
a liquid layer changing unit that changes the liquid layer between the first state and the second state;
a control unit that controls the liquid layer changing unit and the one or more light sources to provide the liquid layer in the first state with the one or more light sources turned off, the liquid layer in the second state with the one or more light sources turned off, or the liquid layer in the second state with the one or more light sources turned on.
